# EUROPÄISCHE PATENTSCHRIFT

(11) **EP 3 920 294 B1**
(45) Veröffentlichungstag und Bekanntmachung des Hinweises auf die Patenterteilung: **18.01.2023**
(21) Anmeldenummer: 21175352.0
(22) Anmeldetag: 21.05.2021
(51) Int. Cl.: H01M 8/2465

(54) **ENERGIEVERSORGUNGSEINHEIT FÜR EIN BRENNSTOFFZELLENSYSTEM, BRENNSTOFFZELLENSYSTEM**
FUEL CELL SYSTEM AND POWER SUPPLY UNIT FOR FUEL CELL SYSTEM,
UNITÉ D'ALIMENTATION POUR UN SYSTÈME DE PILES À COMBUSTIBLE, SYSTÈME DE PILES À COMBUSTIBLE

(30) Priorität: 03.06.2020 DE 102020206903
(43) Veröffentlichungstag der Anmeldung: 08.12.2021
(73) Patentinhaber: Robert Bosch GmbH, 70442 Stuttgart (DE)
(72) Erfinder: LUTZ, Gerhard, 71254 Ditzingen (DE); REINOEHL, Markus, 70499 Stuttgart (DE); ESSLING, Rolf-Peter, 72622 Reudern (DE); DORN, Holger, 74321 Bietigheim-Bissingen (DE); HOWEY, Friedrich, 71254 Ditzingen (DE)

(56) Entgegenhaltungen:
- DE-A1-102016 004 283
- DE-A1-102016 013 799
- US-A1- 2020 067 108

## Beschreibung

Die vorliegende Erfindung betrifft eine Energieversorgungseinheit für ein Brennstoffzellensystem mit den Merkmalen des Oberbegriffs des Anspruchs 1. Darüber hinaus betrifft die Erfindung ein Brennstoffzellensystem mit einer erfindungsgemäßen Energieversorgungseinheit.

### Stand der Technik

Ein Brennstoffzellensystem muss mit elektrischer Energie versorgt werden. Ferner muss die mit Hilfe des Brennstoffzellensystems erzeugte elektrische Energie einem Speicher und/oder einem Verbraucher zugeführt werden. In mobilen Anwendungen wird daher das Brennstoffzellensystem mit dem vorhandenen Bordnetz verbunden. Die Verbindung kann mit Hilfe eines Hochvoltsteckers oder mit Hilfe eines einfachen Hochvoltkabels hergestellt werden. Anstelle eines Hochvoltsteckers oder Hochvoltkabels kann die Verbindung mit dem Bordnetz auch über eine Energieversorgungseinheit (engl.: "Power Distribution Unit" bzw. PDU) realisiert werden. Die Offenlegungsschrift DE 102016004283 offenbart eine Energieversorgungseinheit für ein Brennstoffzellensystem.

Eine Energieversorgungseinheit für ein Brennstoffzellensystem wird in der Regel mit einem Strom- und/oder Spannungsmessgerät kombiniert. Das Messgerät wird in die Stromführung der Energieversorgungseinheit, insbesondere in stromführende Stromschienen, eingebaut. Das Messgerät weist zur Strom- und/oder Spannungsmessung einen reduzierten Leitungsquerschnitt auf, im Bereich dessen die Verlustwärme groß ist. Es besteht daher die Gefahr, das eine für das Messgerät vorgegebene zulässige Maximaltemperatur überschritten wird. Zumindest ein Teil der Wärme wird über die Stromschienen abgeführt, mit denen das Messgerät mechanisch verbunden ist. Alternativ oder ergänzend kann auch das Gehäuse der Energieversorgungseinheit zur Abführung von Wärme genutzt werden, sofern dieses aus einem gut wärmeleitenden Material gefertigt ist und ein Flächenkontakt zwischen dem Messgerät und dem Gehäuse der Energieversorgungseinheit - unmittelbar oder mittelbar über die Stromschienen - besteht.

Da gut wärmeleitende Materialien zugleich elektrisch leitend sind, muss zusätzlich für eine elektrische Isolierung gesorgt werden, um den erforderlichen Berührschutz zu gewährleisten. Die elektrische Isolierung beeinträchtigt jedoch die notwendige Wärmeabfuhr. Diesen Zielkonflikt gilt es zu lösen.

Zur Lösung des Zielkonflikts wird die Energieversorgungseinheit mit den Merkmalen des Anspruchs 1 vorgeschlagen. Vorteilhafte Weiterbildungen der Erfindung sind den Unteransprüchen zu entnehmen. Ferner wird ein Brennstoffzellensystem mit einer erfindungsgemäßen Energieversorgungseinheit angegeben.

### Offenbarung der Erfindung

Die für ein Brennstoffzellensystem vorgeschlagene Energieversorgungseinheit umfasst ein zumindest bereichsweise aus Metall gefertigtes Gehäuse sowie ein mit dem Gehäuse verbundenes Strom- und/oder Spannungsmessgerät, wobei das Strom- und/oder Spannungsmessgerät mindestens eine Lasche zur Verbindung mit einer Stromschiene aufweist. Erfindungsgemäß ist das Strom- und/oder Spannungsmessgerät, vorzugsweise die mindestens eine Lasche des Strom- und/oder Spannungsmessgeräts, lediglich mittelbar über mindestens einen Metallblock in wärmeübertragender Weise mit einem metallischen Bereich des Gehäuses verbunden.

Das heißt, dass bei der vorgeschlagenen Energieversorgungseinheit kein direkter Kontakt des Strom- und/oder Spannungsmessgeräts mit dem Gehäuse der Energieversorgungseinheit besteht. Da kein direkter Kontakt besteht, ist der erforderliche Berührungsschutz gewährleistet. Zugleich stellt die Verbindung des Strom- und/oder Spannungsmessgeräts mit dem mindestens einen Metallblock sicher, dass die im Betrieb entstehende Verlustwärme über den Metallblock abgeführt wird. Zum Einen wird Wärme von dem Metallblock unmittelbar an die Umgebung abgegeben. Zum Anderen wird zumindest ein Teil der Wärme vom Metallblock auf das Gehäuse der Energieversorgungseinheit übertragen.

Vorteilhafterweise ist das Strom- und/oder Spannungsmessgerät über die mindestens eine Lasche auf dem Metallblock abgestützt. Die Verlustwärme wird somit über die Lasche an den Metallblock abgegeben. Bevorzugt weist das Strom- und/oder Spannungsmessgerät mindestens zwei Laschen an sich gegenüberliegenden Seiten auf, von denen jede auf einem Metallblock abgestützt ist. Auf diese Weise ist das Strom- und/oder Spannungsmessgerät optimal stabilisiert. Der mindestens eine weitere Metallblock steigert zudem die Wärmeabfuhr.

Bevorzugt ist zwischen dem mindestens einen Metallblock und dem metallischen Bereich des Gehäuses der Energieversorgungseinheit ein elektrisch isolierender Spalt ausgebildet. Auf diese Weise wird eine elektrische Isolierung des Metallblocks gegenüber dem Gehäuse der Energieversorgungseinheit erreicht. Alternativ oder ergänzend wird vorgeschlagen, dass zwischen dem mindestens einen Metallblock und dem metallischen Bereich des Gehäuses der Energieversorgungseinheit ein elektrisch isolierendes Material eingelegt ist. Beispielsweise kann ein dünner Kunststoffkörper oder eine elektrisch isolierende Folie zwischen dem Metallblock und dem metallischen Bereich des Gehäuses eingelegt sein. Ferner kann der Spalt mit einer elektrisch isolierenden Vergussmasse gefüllt werden. Diese besitzt den Vorteil, dass hierüber zugleich ein Toleranzausgleich realisierbar ist.

Die vorgeschlagene elektrische Isolierung des mindestens einen Metallblocks gegenüber dem Gehäuse der Energieversorgungseinheit führt zwar zu einer geringfügigen Verschlechterung der Wärmeabfuhr, diese kann aber über die durch den Metallblock bewirkte Vergrößerung der Fläche weitgehend ausgeglichen werden. Sofern der Spalt zwischen dem Metallblock und dem Gehäuse der Energieversorgungseinheit durch ein elektrisch isolierendes Material ausgefüllt wird, kann durch eine mechanische Vorspannung des Metallblocks gegenüber dem Gehäuse der Flächenkontakt verbessert werden, was sich auch vorteilhaft auf die Wärmeabfuhr auswirkt.

Gemäß einer bevorzugten Ausgestaltung der Erfindung weist der metallische Bereich des Gehäuses der Energieversorgungseinheit eine geometrische Ausformung zur mittelbaren Verbindung mit dem Strom- und/oder Spannungsmessgerät auf. Die geometrische Ausformung erleichtert die Anbindung des Messgeräts. Ferner werden zusätzliche Flächen zur Wärmeübertragung geschaffen. Vorzugsweise ist die geometrische Ausformung im Wesentlichen quaderförmig ausgebildet. Dadurch werden ebene Anlageflächen geschaffen. Alternativ oder ergänzend wird vorgeschlagen, dass die geometrische Ausformung eine dem Strom-und/oder Spannungsmessgerät zugewandte Oberfläche sowie mindestens eine winklig hierzu angeordnete Seitenfläche zur unmittelbaren oder mittelbaren Anlage des mindestens einen Metallblocks aufweist. Sofern mindestens zwei Metallblöcke vorgesehen sind, können diese auf sich gegenüberliegenden Seiten der geometrischen Ausformung angeordnet werden, so dass ihre Innenflächen jeweils unmittelbar oder mittelbar über eine elektrische Isolierung dem den Seitenflächen der Ausformung anliegen. Auf diese Weise werden großflächige Wärmeübertragungsflächen geschaffen.

Ferner bevorzugt ist zur Optimierung der Wärmeübertragung der mindestens eine Metallblock quaderförmig ausgebildet und flach anliegend an der Seitenfläche der Ausformung angeordnet.

Das Strom- und/oder Spannungsmessgerät ist vorzugsweise über die mindestens eine Lasche mit dem mindestens einen Metallblock verbunden, weiterhin vorzugsweise verschraubt. In der Lasche kann hierzu mindestens eine Bohrung zur Aufnahme eines Gewindebolzens ausgebildet sein. Mindestens eine weitere Bohrung ist vorzugsweise im Metallblock vorgesehen. Die Verbindung über eine Schraubverbindung erleichtert die Montage und ermöglicht im Bedarfsfall zudem eine schnelle und zerstörungsfreie Demontage des Strom- und/oder Spannungsmessgeräts. Alternativ kann die Lasche mit dem Metallblock verschweißt sein.

Des Weiteren wird vorgeschlagen, dass die Stromschiene mit der Lasche und/oder dem Metallblock verbunden, vorzugsweise verschraubt, ist. Die Schraubverbindung kann beispielsweise zusammen mit der Schraubverbindung zwischen der Lasche und dem Metallblock realisiert werden, so dass derselbe Gewindebolzen verwendbar ist. Dies spart Material und Arbeitszeit, da beide Schraubverbindungen in einem Arbeitsgang hergestellt werden. Vorzugsweise ist dabei die Lasche zwischen der Stromschiene und dem Metallblock angeordnet, um die Verlustwärme des Strom- und/oder Spannungsmessgeräts über die Lasche direkt in den Metallblock einzuleiten. Über die Stromschiene, die auf der dem Metallblock abgewandten Seite der Lasche angeordnet ist, kann eine zusätzliche Wärmeabfuhr bewirkt werden. Alternativ kann die Stromschiene mit der Lasche und/oder dem Metallblock verschweißt sein.

In Weiterbildung der Erfindung wird vorgeschlagen, dass der Metallblock mit einem Bereich oder einem Teil des Gehäuses verbunden, vorzugsweise verschraubt, ist, der bzw. das aus Kunststoff gefertigt ist. Das Teil kann beispielsweise ein Kunststoffeinsatz in Form eines Rahmens, eines Trägers oder eines Füllkörpers sein. Das Teil kann zudem fest mit dem metallischen Bereich des Gehäuses verbunden sein. Der Bereich bzw. das Teil aus Kunststoff bewirkt eine elektrische Isolierung des mindestens einen Metallblocks gegenüber dem Gehäuse der Energieversorgungseinheit im Bereich der Befestigung des Metallblocks am Gehäuse. Denn der Bereich der Befestigung muss nicht zwingend gleich dem Bereich der Wärmeübertragung sein. In der bevorzugten Ausgestaltung fallen diese beiden Bereiche auseinander.

Vorteilhafterweise ist in den Bereich oder in das Teil des Gehäuses, der bzw. das aus Kunststoff gefertigt ist, mindestsens eine vorzugsweise metallische Gewindebuchse zur Aufnahme eines Gewindebolzens integriert. Die metallische Gewindebuchse optimiert die Schraubverbindung zwischen dem Metallblock und dem Bereich bzw. Teil des Gehäuses, das aus Kunststoff gefertigt ist.

Zur weiteren Optimierung der Abfuhr der Verlustwärme des Strom- und/oder Spannungsmessgeräts über das Gehäuse der Energieversorgungseinheit wird vorgeschlagen, dass das Gehäuse gekühlt, beispielsweise wassergekühlt, ist.

Das darüber hinaus zur Lösung des eingangs genannten Zielkonflikts vorgeschlagene Brennstoffzellensystem zeichnet sich dadurch aus, dass es eine erfindungsgemäße Energieversorgungseinheit zur Energieversorgung und zur Weitergabe von elektrischer Energie umfasst. Das vorgeschlagene Brennstoffzellensystem weist die gleichen Vorteile wie die erfindungsgemäße Energieversorgungseinheit auf, so dass dementsprechend auf die Beschreibung der Energieversorgungseinheit verwiesen wird.

Die Erfindung wird nachfolgend anhand der beigefügten Zeichnungen näher erläutert. Diese zeigen:
Fig. 1 eine schematische Draufsicht auf eine erfindungsgemäße Energieversorgungseinheit mit eingebautem Strom- und/oder Spannungsmessgerät,
Fig. 2 eine perspektivische Darstellung des Gehäuses der in der Fig. 1 dargestellten Energieversorgungseinheit,
Fig. 3 einen schematischen Längsschnitt durch die Energieversorgungseinheit der Fig. 1 im Bereich des Strom- und/oder Spannungsmessgeräts,
Fig. 4 einen schematischen Querschnitt durch die Energieversorgungseinheit der Fig. 1 im Bereich des Strom- und/oder Spannungsmessgeräts und
Fig. 5 einen schematischen Längsschnitt durch die Energieversorgungseinheit der Fig. 1 im Bereich einer am Gehäuse befestigten Stromschiene.

### Ausführliche Beschreibung der Zeichnungen

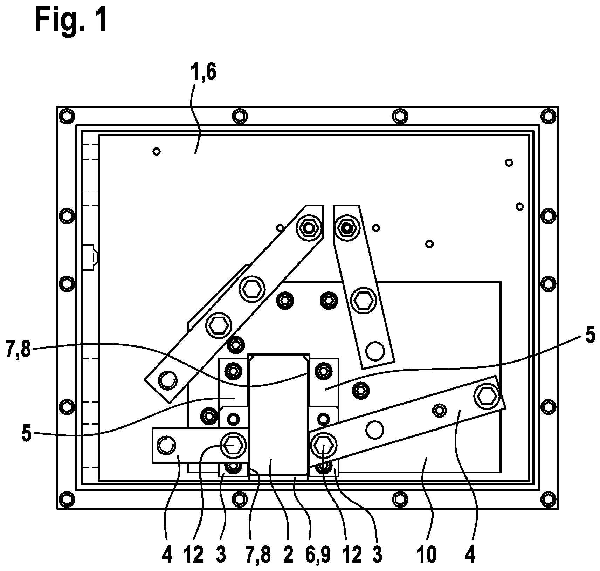

Der Fig. 1 ist eine erfindungsgemäße Energieversorgungseinheit (PDU) für ein Brennstoffzellensystem zu entnehmen. Die Energieversorgungseinheit umfasst ein Gehäuse 1 sowie ein am Gehäuse 1 befestigtes Strom- und/oder Spannungsmessgerät 2. Das Strom- und/oder Spannungsmessgerät 2 weist an zwei sich gegenüberliegenden Seiten jeweils eine Lasche 3 zur Befestigung am Gehäuse 1 sowie zur Befestigung von Stromschienen 4 auf. Das Strom- und/oder Spannungsmessgerät 2 ist dabei über die beiden Laschen 3 an Metallblöcken 5 abgestützt, die beidseits einer geometrischen Ausformung 9 des Gehäuses 1 angeordnet und mit einem Teil 10 des Gehäuses 1 verbunden bzw. verschraubt sind, das aus Kunststoff gefertigt ist. Auf diese Weise werden einerseits eine gute Wärmeabfuhr der im Betrieb des Strom- und/oder Spannungsmessgeräts 2 entstehenden Verlustwärme und andererseits eine elektrische Isolierung erzielt.

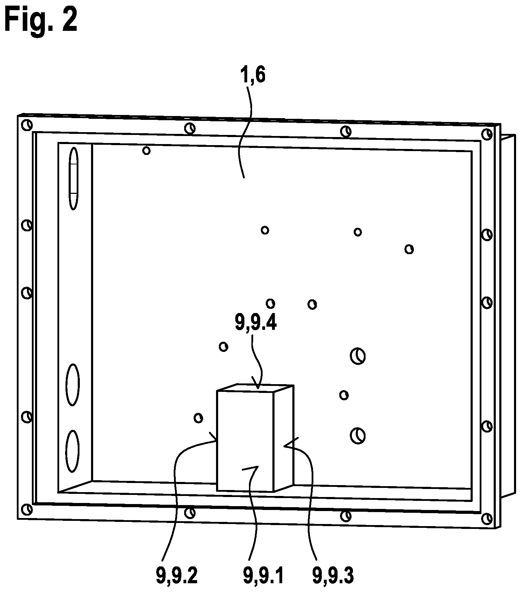

Wie der Fig. 2 zu entnehmen ist, die das Gehäuse 1 der Energieversorgungseinheit zeigt, ist die Ausformung 9 im Wesentlichen quaderförmig gestaltet. Sie weist eine Oberfläche 9.1 auf, die dem Strom- und/oder Spannungsmessgerät 2 zugewandt ist, sowie drei Seitenflächen 9.2, 9.3, 9.4, die senkrecht zur Oberfläche 9.1 angeordnet sind, wobei an den sich gegenüberliegenden Seitenflächen 9.2, 9.3 die beiden Metallblöcke 5 angeordnet sind. Fig. 2 zeigt den Bereich 6 des Gehäuses 1, der aus einem metallischen Werkstoff gefertigt ist. Der metallische Werkstoff gewährleistet eine gute Wärmeübertragung.

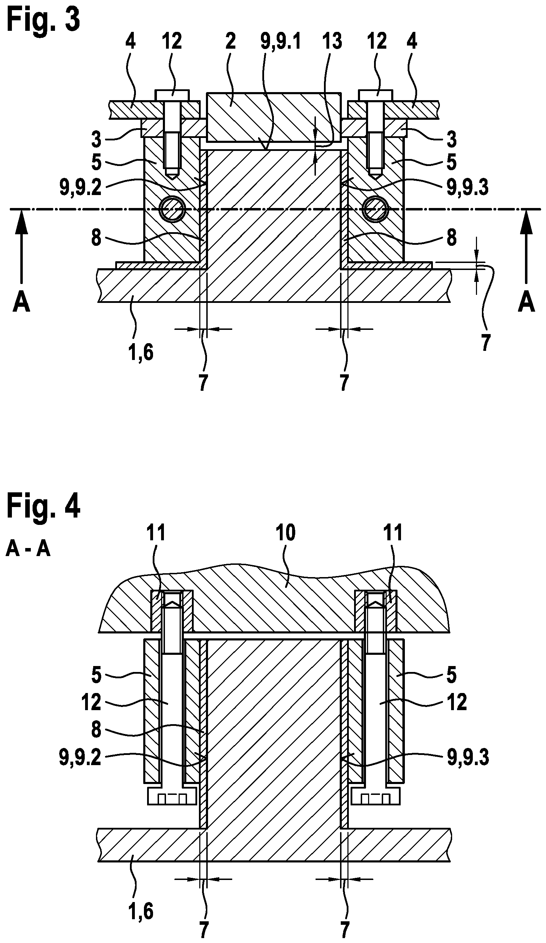

Die Fig. 3 zeigt, dass das Strom- und/oder Spannungsmessgerät 2 keinen direkten Kontakt zum Gehäuse 1 der Energieversorgungseinheit aufweist, sondern ein Spalt 13 zwischen dem Messgerät 2 und dem Gehäuse 1 verbleibt. Der Spalt 13 dient der elektrischen Isolierung. Zwischen den Metallblöcken 5 und der Ausformung 9 des Gehäuses 1 verbleibt ebenfalls jeweils ein Spalt 7. Die Spalts 7 sind vorliegend jeweils mit einem elektrisch isolierenden Material 8 gefüllt. Beispielsweise kann in den Spalten 7 jeweils ein dünner Kunststoffkörper angeordnet sein. Gegenüber dem Kunststoffkörper können die beiden Metallblöcke 5 mechanisch vorgespannt werden, um einen optimalen Flächenkontakt zu gewährleisten.

Wie der Fig. 4 zu entnehmen ist, die einen Schnitt entlang der Schnittlinie A-A der Fig. 3 zeigt, erfolgt die Befestigung der beiden Metallblöcke 5 am Gehäuse 1 nicht im Bereich der Ausformung 9, sondern über eine Schraubverbindung mit dem Teil 10 des Gehäuses 1, das aus Kunststoff gefertigt ist. In das Teil 10 sind hierzu metallische Gewindebuchsen 11 zur Aufnahme von Gewindebolzen 12 eingesetzt.

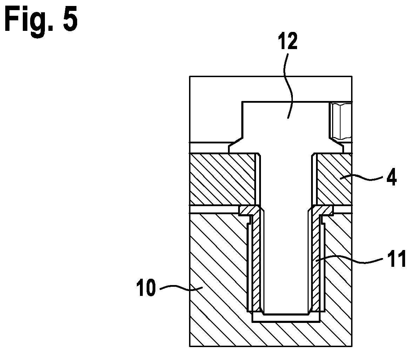

Sofern Stromschienen 4 an dem Gehäuse 1 zu befestigen sind, kann die Befestigung - wie in der Fig. 5 beispielhaft dargestellt - ebenfalls über eine Schraubverbindung mit dem aus Kunststoff gefertigten Teil 10 des Gehäuses 1 erfolgen. Zur Aufnahme der Gewindebolzen 12 sind wiederum Gewindebuchsen 11 in das Teil 10 eingesetzt.

## Patentansprüche

1. Energieversorgungseinheit für ein Brennstoffzellensystem, umfassend ein zumindest bereichsweise aus Metall gefertigtes Gehäuse (1) sowie ein mit dem Gehäuse (1) verbundenes Strom- und/oder Spannungsmessgerät (2), wobei das Strom- und/oder Spannungsmessgerät (2) mindestens eine Lasche (3) zur Verbindung mit einer Stromschiene (4) aufweist,
**dadurch gekennzeichnet, dass** das Strom- und/oder Spannungsmessgerät (2), vorzugsweise die mindestens eine Lasche (3) des Strom- und/oder Spannungsmessgeräts (2), lediglich mittelbar über mindestens einen Metallblock (5) in wärmeübertragender Weise mit einem metallischen Bereich (6) des Gehäuses (1) verbunden ist.

2. Energieversorgungseinheit nach Anspruch 1,
**dadurch gekennzeichnet, dass** zwischen dem mindestens einen Metallblock (5) und dem metallischen Bereich (6) des Gehäuses (1) ein elektrisch isolierender Spalt (7) ausgebildet und/oder ein elektrisch isolierendes Material (8) eingelegt ist.

3. Energieversorgungseinheit nach Anspruch 1 oder 2,
**dadurch gekennzeichnet, dass** der metallische Bereich (6) des Gehäuses (1) eine geometrische Ausformung (9) zur mittelbaren Verbindung mit dem Strom- und/oder Spannungsmessgerät (2) aufweist, wobei vorzugsweise die geometrische Ausformung (9) im Wesentlichen quaderförmig ausgebildet ist und/oder eine dem Strom-und/oder Spannungsmessgerät (2) zugewandte Oberfläche (9.1) sowie mindestens eine winklig hierzu angeordnete Seitenfläche (9.2, 9.3, 9.4) zur unmittelbaren oder mittelbaren Anlage des mindestens einen Metallblocks (5) aufweist.

4. Energieversorgungseinheit nach Anspruch 3,
**dadurch gekennzeichnet, dass** der mindestens eine Metallblock (5) quaderförmig ausgebildet ist und flach anliegend an der Seitenfläche (9.2, 9.3) der Ausformung (9) angeordnet ist.

5. Energieversorgungseinheit nach einem der vorhergehenden Ansprüche, **dadurch gekennzeichnet, dass** das Strom- und/oder Spannungsmessgerät (2) über die mindestens eine Lasche (3) mit dem mindestens einen Metallblock (5) verbunden, vorzugsweise verschraubt oder verschweißt, ist.

6. Energieversorgungseinheit nach einem der vorhergehenden Ansprüche, **dadurch gekennzeichnet, dass** die Stromschiene (4) mit der Lasche (3) und/oder dem Metallblock (5) verbunden, vorzugsweise verschraubt oder verschweißt, ist, wobei vorzugsweise die Lasche (3) zwischen der Stromschiene (4) und dem Metallblock (5) angeordnet ist.

7. Energieversorgungseinheit nach einem der vorhergehenden Ansprüche, **dadurch gekennzeichnet, dass** der Metallblock (5) mit einem Bereich oder einem Teil (10) des Gehäuses (1) verbunden, vorzugsweise verschraubt, ist, der bzw. das aus Kunststoff gefertigt ist.

8. Energieversorgungseinheit nach Anspruch 7,
**dadurch gekennzeichnet, dass** in den Bereich oder in das Teil (10) des Gehäuses (1), der bzw. das aus Kunststoff gefertigt ist, mindestsens eine vorzugsweise metallische Gewindebuchse (11) zur Aufnahme eines Gewindebolzens (12) integriert ist.

9. Energieversorgungseinheit nach einem der vorhergehenden Ansprüche, **dadurch gekennzeichnet, dass** das Gehäuse (1) gekühlt, beispielsweise wassergekühlt, ist.

10. Brennstoffzellensystem mit einer Energieversorgungseinheit nach einem der vorhergehenden Ansprüche zur Energieversorgung und zur Weitergabe von elektrischer Energie.

## Claims

1. Power supply unit for a fuel cell system, comprising a housing (1) at least partly made of metal and a current and/or voltage measuring device (2) connected to the housing (1), wherein the current and/or voltage measuring device (2) has at least one tab (3) for connection to a bus bar (4),
**characterized in that** the current and/or voltage measuring device (2), preferably the at least one tab (3) of the current and/or voltage measuring device (2), is connected to a metallic area (6) of the housing (1) in a heat-transmitting manner only indirectly via at least one metal block (5).

2. Power supply unit according to Claim 1,
**characterized in that** an electrically insulating gap (7) is formed and/or an electrically insulating material (8) is inserted between the at least one metal block (5) and the metallic area (6) of the housing (1).

3. Power supply unit according to Claim 1 or 2,
**characterized in that** the metallic area (6) of the housing (1) has a geometric moulding (9) for the indirect connection to the current and/or voltage measuring device (2), wherein preferably the geometric moulding (9) is substantially cubic and/or has a surface (9.1) facing the current and/or voltage measuring device (2) and at least one side surface (9.2, 9.3, 9.4) arranged at an angle thereto for the direct or indirect contact of the at least one metal block (5).

4. Power supply unit according to Claim 3,
**characterized in that** the at least one metal block (5) is cubic and is arranged to lie flat on the side surface (9.2, 9.3) of the moulding (9).

5. Power supply unit according to one of the preceding claims,
**characterized in that** the current and/or voltage measuring device (2) is connected, preferably screwed or welded, to the at least one metal block (5) via the at least one tab (3).

6. Power supply unit according to one of the preceding claims,
**characterized in that** the bus bar (4) is connected, preferably screwed or welded, to the tab (3) and/or the metal block (5), wherein the tab (3) is preferably arranged between the bus bar (4) and the metal block (5).

7. Power supply unit according to one of the preceding claims,
**characterized in that** the metal block (5) is connected, preferably screwed, to an area or part (10) of the housing (1) which is made of plastic.

8. Power supply unit according to Claim 7,
**characterized in that** at least one preferably metallic threaded bush (11) for holding a threaded bolt (12) is integrated into the area or into the part (10) of the housing (1) which is made of plastic.

9. Power supply unit according to one of the preceding claims,
**characterized in that** the housing (1) is cooled, for example water-cooled.

10. Fuel cell system comprising a power supply unit according to one of the preceding claims for supplying power and for passing on electrical energy.

## Revendications

1. Unité d'alimentation en énergie destinée à un système de pile à combustible, ladite unité d'alimentation en énergie comprenant un boîtier (1) réalisé au moins partiellement en métal et un appareil de mesure de courant et/ou de tension (2) relié au boîtier (1), l'appareil de mesure de courant et/ou de tension (2) comportant au moins une attache (3) destinée au raccordement à une barre conductrice (4), **caractérisée en ce que** l'appareil de mesure de courant et/ou de tension (2), de préférence l'au moins une attache (3) de l'appareil de mesure de courant et/ou de tension (2), n'est reliée qu'indirectement, par le biais d'au moins un bloc métallique (5), de manière thermoconductrice à une zone métallique (6) du boîtier (1) .

2. Unité d'alimentation en énergie selon la revendication 1,
**caractérisée en ce qu'**un espace électriquement isolant (7) est ménagé, et/ou un matériau électriquement isolant (8) est inséré, entre l'au moins un bloc métallique (5) et la zone métallique (6) du boîtier (1) .

3. Unité d'alimentation en énergie selon la revendication 1 ou 2,
**caractérisée en ce que** la zone métallique (6) du boîtier (1) a une conformation géométrique (9) permettant d'établir une liaison indirecte avec l'appareil de mesure de courant et/ou de tension (2), la conformation géométrique (9) étant de préférence sensiblement une forme cuboïde et/ou comportant une surface (9.1) dirigée vers l'appareil de mesure de courant et/ou de tension (2) et au moins une surface latérale (9.2, 9.3, 9.4) disposée angulairement par rapport à celle-ci et destinée à venir directement ou indirectement en appui sur l'au moins un bloc métallique (5).

4. Unité d'alimentation en énergie selon la revendication 3,
**caractérisée en ce que** l'au moins un bloc métallique (5) est de forme cuboïde et est disposé en appui à plat sur la surface latérale (9.2, 9.3) de la conformation (9) .

5. Unité d'alimentation en énergie selon l'une des revendications précédentes,
**caractérisée en ce que** l'appareil de mesure de courant et/ou de tension (2) est relié, de préférence vissé ou soudé, par le biais de l'au moins une attache (3) à l'au moins un bloc métallique (5).

6. Unité d'alimentation en énergie selon l'une des revendications précédentes,
**caractérisée en ce que** la barre conductrice (4) est reliée, de préférence vissée ou soudée, à l'attache (3) et/ou au bloc métallique (5), l'attache (3) étant de préférence disposée entre la barre conductrice (4) et le bloc métallique (5).

7. Unité d'alimentation en énergie selon l'une des revendications précédentes,
**caractérisée en ce que** le bloc métallique (5) est relié, de préférence vissé, à une zone ou partie (10) du boîtier (1) qui est en matière synthétique.

8. Unité d'alimentation en énergie selon la revendication 7,
**caractérisée en ce qu'**au moins une douille filetée (11) de préférence métallique, destinée à recevoir un boulon fileté (12), est intégrée dans la zone ou partie (10) du boîtier (1) qui est réalisée en matière synthétique.

9. Unité d'alimentation en énergie selon l'une des revendications précédentes,
**caractérisée en ce que** le boîtier (1) est refroidi, par exemple refroidi à eau.

10. Système de pile à combustible comprenant une unité d'alimentation en énergie selon l'une des revendications précédentes destinée à l'alimentation en énergie et à la transmission d'énergie électrique.
